# EUROPEAN PATENT SPECIFICATION

(11) **EP 3 577 319 B1**
(45) Date of publication and mention of the grant of the patent: **30.12.2020**
(21) Application number: 18705272.5
(22) Date of filing: 31.01.2018
(51) Int. Cl.: F01D 9/06, F01D 25/24, F02C 6/12

(54) **HOUSING ASSEMBLY FOR A TURBOCHARGER AND METHOD FOR FIXING MULTIPLE CONNECTIONS TO A HOUSING**
GEHÄUSEANORDNUNG FÜR EINEN ABGASTURBOLADER UND VERFAHREN ZUR BEFESTIGUNG MEHRERER VERBINDUNGEN AN EINEM GEHÄUSE
AGENCEMENT DE CARTER POUR UN TURBOCOMPRESSEUR ET PROCÉDÉ DE FIXATION DES CONNEXIONS À UN CARTER

(30) Priority: 01.02.2017 DE 102017201627
(43) Date of publication of application: 11.12.2019
(73) Proprietor: Borgwarner Inc., Auburn Hills, Michigan 48326 (US)
(72) Inventor: PLATOVA, Natalya, 55131 Mainz (DE); MARCINIAK, Dariusz, 57130 Przeworno (PL)
(74) Representative: Peterreins Schley
(86) International application number: PCT/US2018/016099
(87) International publication number: WO 2018/144513

(56) References cited:
- DE-A1-102012 206 304
- DE-U1-202013 010 098
- US-A1- 2011 052 388

## Description

### Field of the Invention

The present invention relates to a housing assembly for a turbocharger.

### Background Information

Increasingly more vehicles of the more recent generation are equipped with charging devices. In order to satisfy target demands and legal requirements, it is imperative to promote development in the complete drive train and also to optimize the individual components as well as the system as a whole with respect to their reliability and efficiency.

Exhaust gas turbochargers are known, for example, in which a turbine with a turbine wheel is driven by the exhaust gas flow of the internal combustion engine. A compressor wheel, which is arranged with a turbine wheel on a mutual shaft, compresses the fresh air taken in for the engine. By this means, the air or oxygen amount is increased that is available to the engine for combustion, which in turn leads to an increased output of the internal combustion engine.

A bearing housing is arranged between the turbine housing and the compressor housing. During operation, the turbocharger must be supplied with various fluids. For example, oil must be available to provide for the shaft mounting. In addition, many modern turbochargers have fluid-cooled housings. For this purpose, for example, special cooling channels may be provided in the bearing housing, the compressor housing, and/or the turbine housing. Corresponding connections must be provided to supply the turbocharger with the corresponding fluids. During mounting of the turbocharger, the corresponding lines are then connected to these connections. This may prove to be complicated and time-consuming, depending on the installation location of the turbocharger.

DE 20 2013 010098 U1 discloses a housing of a gas turbocharger on which a media line is mounted by means of a plug connection. The loosening of the plug connection is assured by a securing element which secures the media line on the turbocharger housing. The securing element is designed as a securing bracket provided with a holding region and on both sides of a respective fixing device which cooperates with an associated holding element of the turbocharger housing.

The object of the present invention is thus to provide a housing assembly for a turbocharger that enables a simple and secure mounting of multiple supply lines or connecting pieces thereof.

### Brief Summary of the Invention

The present invention relates to a housing assembly for a turbocharger according to Claim 1 and a method for fixing multiple connections on a housing according to Claim 14.

The housing assembly according to the invention comprises a housing that has at least one first connection opening and one second connection opening, a first connecting piece with a first flange and a second connecting piece with a second flange, wherein the first connecting piece is connected to the first connection opening and the second connecting piece is connected to the second connection opening. The housing additionally has a projection with an overhang, wherein a locking part of the first flange is arranged under the overhang, and wherein the second connecting piece is securely fixed on the housing, and wherein the first flange and the second flange are configured in such a way and arranged with respect to one another that a turning of the first flange is prevented by the second flange. The housing assembly according to the invention has the advantage that a simple and secure mounting is facilitated of at least two connecting pieces on the housing of the housing assembly. In other words, the design according to the invention facilitates that the two connecting pieces may be securely fixed (i.e., there is no risk that the connecting pieces will detach from the housing) on the housing using a few hand movements. In particular, the housing assembly according to the invention facilitates that the two connecting pieces are securely fixed on the housing using, for example, only one single screw, which fixes the second connecting piece on the housing (for example, via its flange). This contributes not only advantages in mounting with respect to time, but also simplifies the mounting in mounting locations for the housing that are narrow or difficult to access (for example, in the engine compartment of a vehicle), or makes the secure attachment of the connecting pieces possible in the first place for these types of mounting locations.

In configurations, the second flange may be fixedly connected to the housing to securely fix the second connecting piece on the housing. In particular, the second flange may be fixed on the housing via a screw connection.

In configurations, which are combinable with all previously described configurations, the second flange may have a borehole, through which a screw extends, that fixes the second flange on the housing.

In configurations, which are combinable with all previously described configurations, the first connecting piece and the second connecting piece may each comprise a tubular unit, wherein the tubular units extend through the respective flange into the corresponding first and second connection openings. The tubular units may each comprise at least one part of a supply line and a connection sleeve.

In configurations, which are combinable with all previously described configurations, at least one seal may be arranged in each connection opening between the connecting piece and the housing wall. In particular, the seal may have at least one O-ring.

In configurations, which are combinable with all previously described configurations, the first and second connection openings may be arranged in a plane. The housing may have a flat lateral surface which lies in the plane. The first and second connection openings may be arranged in the lateral surface. Alternatively, the first and second connection openings may be arranged in two planes arranged spaced apart from one another and parallel to one another. In another alternative, it is also possible that the connection openings are arranged at an angle to one another.

In configurations, which are combinable with all previously described configurations, the first connecting piece and the first flange may be configured in such a way that the first connecting piece may be inserted into the first connection opening during the mounting of the housing assembly and subsequently rotated so that the locking part of the first flange rotates under the overhang. The first connecting piece and the first flange may be configured in such a way that the first connecting piece may be turned by at least 15°, in particular may be turned by at least 90°, after it was inserted into the first connection opening.

In configurations, which are combinable with all previously described configurations, the first flange may have an asymmetrical shape. The first flange may have concave and convex regions along its periphery. The first flange and the second flange may have functionally corresponding geometries in lateral regions that contact one another. The first flange may, for example, have a concave shape in a lateral region contacting the second flange, and the second flange may have a convex shape in a lateral region contacting the first flange. Alternatively, the first flange may have a convex shape in a lateral region contacting the second flange, and the second flange may have a concave shape in a lateral region contacting the first flange. The two lateral regions that contact one another of the first and second flanges may also be configured as straight lines. These functionally corresponding geometries of the flanges have the effect that the second flange prevents a rotation of the first flange and thus of the first connecting piece.

In configurations, which are combinable with all previously described configurations, the housing may have a third connection opening, and a third connecting piece with a third flange may be provided. At least parts of the second flange and the third flange may overlap, such that the third connecting piece may be fixed on the housing together with the second connecting piece. A borehole may be provided in the overlapping parts of the second flange and the third flange respectively, through which a screw may extend which fixes the third connecting piece on the housing together with the second connecting piece. A configuration of this type has the advantage that three connection pieces may be fixed on a housing in the simplest way (by mounting one single screw). In particular, this simple configuration facilitates the secure mounting of three connecting pieces on a single lateral surface of a housing.

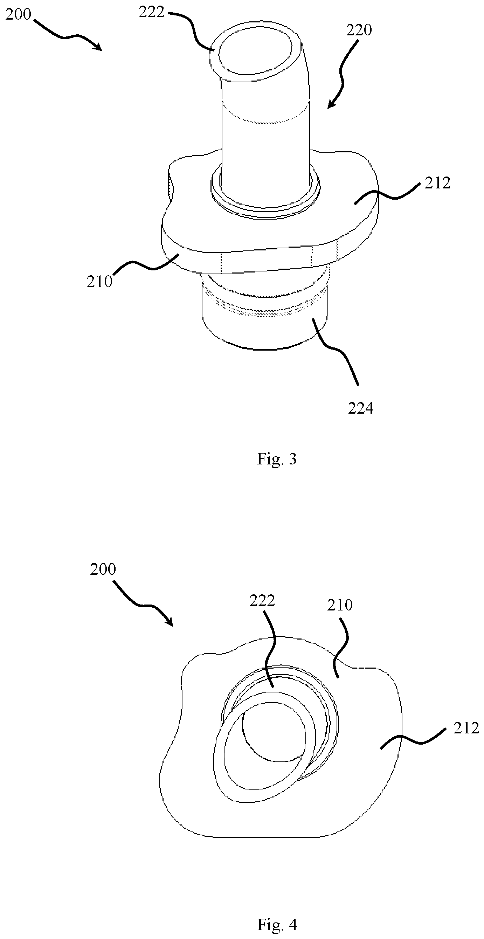

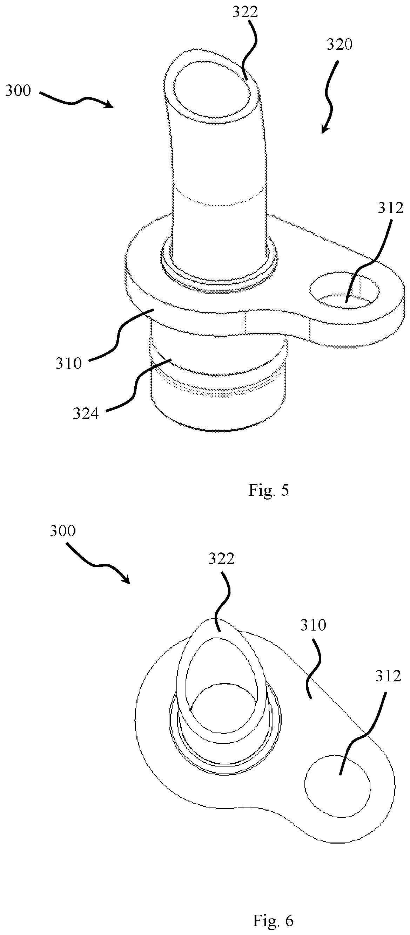

In configurations, which are combinable with all previously described configurations, the first flange may have a peripheral shape as is depicted in Figure 4. The second flange may have a peripheral shape as depicted in Figure 6.

The invention additionally comprises a method for fixing multiple connections to a housing. The method comprises the following steps: inserting a first connecting piece into a first connection opening of the housing, wherein the first connecting piece comprises a first flange; turning the first connecting piece so that a locking part of the first flange is arranged under an overhang of a projection of the housing, and inserting a second connecting piece into a second connection opening of the housing, wherein the second connecting piece comprises a second flange. The first flange and the second flange are configured in such a way that a turning of the first flange is no longer possible after the insertion of the second connecting piece. The second connecting piece is subsequently fixed on the housing.

In configurations, the method may comprise that the second connecting piece is fixed on the housing by means of a screw which projects through a borehole of the second flange.

In configurations of the method, which are combinable with all previously described configurations, prior to the fixing of the second flange on the housing, a third connecting piece with a third flange may be inserted into a third connection opening, and subsequently the third connecting piece may be fixed on the housing together with the second connecting piece via the third flange and the second flange.

Additional details and features of the invention are subsequently described by way of the figures.

### Brief Description of the Drawings

- **Figure 1**: shows a top view of a first embodiment of the housing assembly according to the invention;
- **Figure 2**: shows a side sectional view of the first embodiment;
- **Figure 3**: shows a first enlarged view of a first embodiment of a connecting piece of the housing assembly according to the invention;
- **Figure 4**: shows a second enlarged view of a first embodiment of a connecting piece of the housing assembly according to the invention;
- **Figure 5**: shows a first enlarged view of a second embodiment of a connecting piece of the housing assembly according to the invention;
- **Figure 6**: shows a second enlarged view of a second embodiment of a connecting piece of the housing assembly according to the invention.

### Detailed Description of the Invention

Embodiments of the housing assembly according to the invention for a turbocharger will subsequently be described based on the figures. In addition, a method is described for fixing multiple connections to a housing.

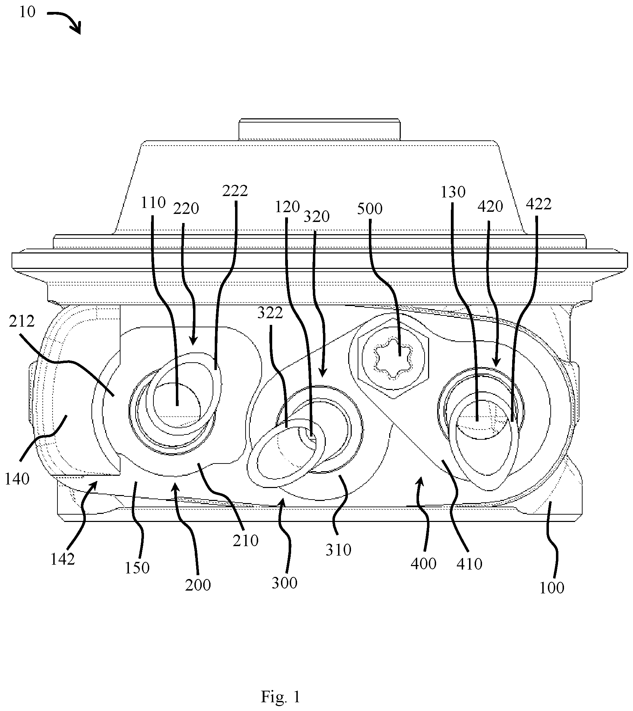

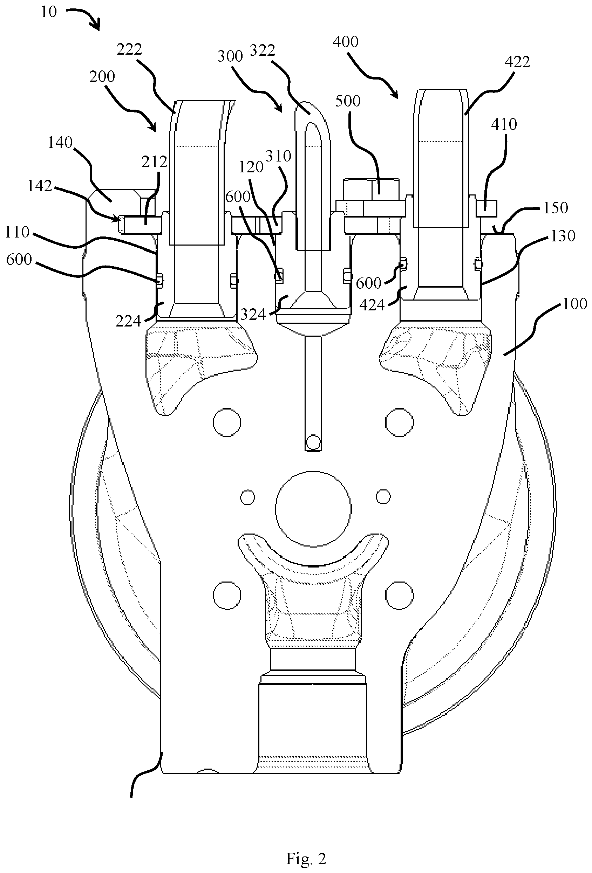

**Figure 1** and **Figure 2** show a top view and a sectional view of the housing assembly 10 according to the invention. Housing assembly 10 comprises a housing 100 which has at least one first connection opening 110 and one second connection opening 120. In the example shown in **Figure 1**, housing assembly 10 also has a third connection opening 130. First, second, and third connecting pieces 200, 300, 400 are provided with corresponding first, second, and third flanges 210, 310, 410. First connecting piece 200 is connected to first connection opening 110, second connecting piece 300 is connected to second connection opening 120, and third connecting piece 400 is connected to third connection opening 130. Housing 100 additionally has a projection 140 with an overhang 142, wherein a locking part 212 of first flange 210 is arranged under overhang 142. First flange 210 and second flange 310 are configured in such a way and arranged with respect to one another that a turning of first flange 210 is prevented by second flange 310 (see **Figure 1**). Housing assembly 10 according to the invention has the advantage that a simple and secure mounting of two connecting pieces on housing 100 of housing assembly 10 is facilitated.

As is clear in particular from **Figure 2**, a first part, locking part 212 of first flange 210 of first connecting piece 200, is arranged under overhang 142 of projection 140 of housing 100. This prevents the connecting piece from falling out of housing 100 or makes it impossible to pull the connecting piece out of housing 100. Second flange 310 of second connecting piece 300 functions as an anti-rotation means for first connecting piece 200. Thus, it is also impossible that the first connecting piece is turned in such a way that locking part 212 of the first flange is no longer positioned under overhang 142 (by which means it would be possible for it to fall out or be pulled out).

The design according to the invention advantageously facilitates that the two connecting pieces 200, 300 are securely fixed on the housing (i.e., there is no risk that the connecting pieces will detach from the housing) using few hand movements. In particular, the housing assembly according to the invention facilitates that the two connecting pieces (or three connecting pieces 200, 300, 400 as shown in **Figure 1**) are securely fixed on housing 100 using, for example, only one single screw 500, which fixes second connecting piece 300 and third connecting piece 400 on housing 100 (as is seen in **Figure 1**) via respective flange 310, 410. This contributes not only advantages in mounting with respect to time, but also simplifies the mounting in mounting locations for housing 100 that are narrow or difficult to access (for example, in the engine compartment of a vehicle), or makes the secure attachment of connecting pieces 200, 300, 400 possible in the first place for these types of mounting locations. In addition to the possibility for fixing three connecting pieces 200, 300, 400 on housing 100, as this is shown in **Figure 1** and **Figure 2**, only two connecting pieces 200, 300 may naturally be fixed on the housing using the same principle (a first connecting piece then rotates with its flange under a projection and a second connecting piece is fixed in another way, for example, via a screw, on the housing and prevents a rotation of the first connecting piece). Third connecting piece 400 is then omitted. This may be advantageous in installation locations that are particularly difficult to access, in which a combined fixing of two connecting pieces with one screw is not possible (as is shown in **Figure 1** for second and third connecting pieces 300 and 400).

As is clear in **Figure 1****,** projection 140 with its overhang 142 is arranged in the surroundings/in the region of first connection opening 110. First flange 210, second flange 310, and third flange 410 are fixedly connected to the respective connecting piece 200, 300, 400 so that no rotation or translation of respective flange 210, 310, 410 is possible with respect to the remaining components of respective connecting piece 200, 300, 400 (for example, a tubular supply element, like a hose, a (supply) line, or a (supply) pipe).

In the example of **Figure 1** and of **Figure 2****,** second flange 310 and third flange 410, and thus second and third connecting pieces 300, 400, are fixedly connected to housing 100. To be able to easily mount second and third connecting pieces 300, 400, parts of second flange 310 and third flange 410 overlap, so that third connecting piece 400 may be fixed on housing 100 together with second connecting piece 300. As is clear in **Figure 1** and **Figure 2****,** a part of third flange 410 overlaps a part of second flange 310 for this purpose. This means, the shapes of second flange 310 and third flange 410 are selected in such a way that there are overlapping regions of flanges 310, 410 after inserting second and third connecting pieces 300, 400 into connection openings 120, 130. The shape may be teardrop shaped, as depicted in **Figure 5** and **Figure 6** for second connecting piece 300. Alternatively, a part of second flange 310 may overlap a part of third flange 410. A borehole is provided in each of the overlapping parts of second flange 310 and third flange 410, through which borehole screw 500 extends and fixes third connecting piece 400 on housing 100 together with second connecting piece 300. Borehole 312 of second flange 310 is clear in **Figure 5** and **Figure 6****.** A configuration of this type of second and third connecting pieces 300, 400 has the advantage that three connection sleeves 200, 300, 400 may be fixed on a housing in the simplest way (by applying one single screw). In particular, this simple configuration facilitates the attaching of three connecting pieces 200, 300, 400 on a single lateral surface 150 of a housing.

In alternative configurations, which are not depicted in the figures, a second projection with a second overhang may be provided on housing 100, wherein the third connecting piece (alternatively the second connecting piece) likewise has a locking part, and, corresponding to the first connecting piece during assembly, is inserted and turned chronologically before the second connecting piece (alternatively the third connecting piece), and consequently only the second connecting piece (alternatively the third connecting piece) is fixed on the housing with a screw. Alternatively, the second connecting piece (or the third connecting piece) may comprise an outer thread and may be screwed directly into a corresponding thread in the second connection opening (or the third connection opening). In these alternative embodiments, the second connecting piece prevents a turning of the first connecting piece and of the third connecting piece (alternatively, the second connecting piece prevents a turning of the first connecting piece and the third connecting piece prevents a turning of the second connecting piece).

First connecting piece 200, second connecting piece 300, and third connecting piece 400 each have a tubular unit 220, 320, 420, wherein tubular units 220, 320, 420 extend through respective flange 210, 310, 410 into corresponding first, second, and third connection openings 110, 120, 130. As is clear in **Figure 2****,** tubular units 220, 320, 420 each comprise at least one part of a supply line 222, 322, 422 and a connection sleeve 224, 324, 424. Supply lines 222, 322, 422 thereby project out of the respective flange and away from housing 100. Connection sleeves 224, 324, 424 are largely positioned in corresponding connection openings 110, 120, 130 (see **Figure 2**)**.** In particular, supply lines 222, 322, 422 are fixedly connected to connection sleeves 224, 324, 424. Supply lines 222, 322, 422 of three connecting pieces 200, 300, 400 may, for example, be a cooling water supply line, a cooling water discharge line, and an oil supply line (or oil discharge line). For example, first connecting piece 200 may comprise a cooling water supply line, third connecting piece 400 may comprise a cooling water discharge line, and second connecting piece 300 may comprise an oil supply line.

At least one seal 600 is arranged in each case in connection openings 110, 120, 130 between connecting pieces 200, 300, 400 and the housing wall. In particular, seals 600 may have at least one O-ring. Seals 600 are arranged in grooves (see **Figure 2**) in connection sleeves 224, 324, 424 of tubular units 220, 320, 420 of connecting pieces 200, 300, 400. By this means, seals 600 may be premounted on connecting pieces 200, 300 400 prior to the fixing of connecting pieces 200, 300, 400 on housing 100, so that connecting pieces 200, 300, 400 with seals 600 applied thereon may be inserted directly into connection openings 110, 120, 130 of housing 100.

As is clear in **Figure 1** and **Figure 2****,** first, second, and third connection openings 110, 120, 130 are arranged in a plane. For this purpose, housing 100 has a flat lateral surface 150, in which this plane lies. The first, second, and third connection openings are arranged in lateral surface 150. Alternatively, first, second, and third connection openings 110, 120, 130 may be arranged in two or three planes spaced apart from one another and parallel to one another. In another alternative, it is also possible that connection openings 110, 120, 130 are arranged at an angle to one another. Connecting pieces 200, 300, 400, in particular their flanges 210, 310, 410 are then correspondingly configured in order to be able to realize the functionality described herein for mounting and fixing connecting pieces 200, 300, 400.

As already mentioned, first connecting piece 200 and first flange 210 are configured in such a way that first connecting piece 200 may be inserted into first connection opening 110 during the mounting of housing assembly 10 and subsequently turned such that locking part 212 of first flange 210 rotates under overhang 142. First connecting piece 200 and first flange 210 may be configured, for example, so that the connecting piece 200 may be turned by at least 15°, in particular may be turned by at least 90°, after it was inserted into first connection opening 110.

As is depicted in particular in **Figure 3** and **Figure 4****,** first flange 210 has an asymmetrical shape. According to the example from **Figure 3** and **Figure 4****,** first flange 210 has concave and convex regions along its periphery. Thus, first flange 210 and second flange 310 have functionally corresponding geometries on contacting lateral regions: as is very clear in **Figure 1****,** first flange 210 has a concave shape in the lateral region contacting second flange 310, and second flange 310 has a convex shape in a lateral region contacting first flange 210. Alternatively, first flange 210 may have a convex shape in a lateral region contacting second flange 310, and second flange 310 may have a concave shape in a lateral region contacting first flange 210. It is likewise possible that the two lateral regions of first and second flanges 210, 310 that contact one another are configured as straight lines. These functionally corresponding geometries of flanges 210, 310 have the effect that second flange 310 prevents a rotation of first flange 210 and thus of first connecting piece 200.

In regards to the configuration of the (peripheral) shape of first, second, and third flanges 210, 310, 410, reference is made in particular to **Figures 1****,** and **3** through **6.**

In the following, the method according to the invention is described for fixing multiple connecting pieces 200, 300, 400 to housing 100. Initially, the insertion of first connecting piece 200 into first connection opening 110 of housing 100 is carried out. The next step comprises the turning of first connecting piece 200 so that locking part 212 of first flange 210 is arranged under overhang 142 of projection 140 of housing 100. Subsequently, second connecting piece 300 is inserted into second connection opening 120 of housing 100. Due to the corresponding configuration of first flange 210 and second flange 310, a turning of first flange 210 is impossible after the insertion of second connecting piece 300. Finally, second connecting piece 300 is fixed on housing 100. In the embodiment shown in the figures, second connecting piece 300 is fixed on the housing by means of a screw 500 which protrudes through borehole 312 of second flange 210.

If three connection openings 110, 120, 130 and three connecting pieces 200, 300, 400 are provided, then the insertion of third connecting piece 400 into third connection opening 130 is carried out prior to the fixing of second flange 310 to housing 100. Subsequently, third connecting piece 400 is fixed on housing 100 together with second connecting piece 300 via third flange 410 and second flange 310 (see **Figure 1** and **Figure 2**).

## Claims

1. A housing assembly (10) for a turbocharger, comprising
a housing (100) which has at least one first connection opening (110) and one second connection opening (120),
a first connecting piece (200) with a first flange (210) and a second connecting piece 300 with a second flange (310), wherein the first connecting piece (200) is connected to the first connection opening (110) and the second connecting piece (300) is connected to the second connection opening (120),
**characterized in that** the housing (100) has a projection (140) with an overhang (142), wherein a locking part (212) of the first flange (210) is arranged under the overhang (142), and wherein the second connecting piece (300) is securely fixed on the housing (100), and wherein the first flange (210) and the second flange (310) are configured in such a way and arranged with respect to one another that a turning of the first flange (210) is prevented by the second flange (310).

2. The housing assembly according to Claim 1, **characterized in that** the second flange (310) is fixedly connected to housing (100) to securely fix the second connecting piece (300) on the housing (100), in particular wherein the second flange (310) is fixed on the housing (100) via a screw connection.

3. The housing assembly according to any one of the preceding claims, **characterized in that** the first connecting piece (200) and the second connecting piece (300) respectively comprise a tubular unit (220, 320), wherein the tubular units (220, 320) extend through the respective flange (210, 310) into the corresponding first and second connection openings (110, 120), in particular wherein the tubular units (220, 320) each comprise at least one part of a supply line (222, 322) and a connection sleeve (224 324).

4. The housing assembly according to any one of the preceding claims, **characterized in that** a seal (600) is arranged in the respective connection openings (110, 120) between the connecting pieces (200, 300) and the housing wall, in particular wherein the seal (600) is an O-ring.

5. The housing assembly according to any one of the preceding claims, **characterized in that** the first connecting piece (200) and the first flange (210) are configured in such a way that the first connecting piece (200) is insertable into the first connection opening (110) during the mounting of the housing assembly (10) and is subsequently turnable so that the locking part (212) of the first flange (210) is rotated under the overhang (142).

6. The housing assembly according to Claim 5, **characterized in that** the first connecting piece (200) and the first flange (210) are configured in such a way that the first connecting piece (200) is turnable by at least 15°, in particular is turnable by at least 90°, after it was inserted into the first connection opening (110).

7. The housing assembly according to any one of the preceding claims, **characterized in that** the first flange (210) has an asymmetrical shape.

8. The housing assembly according to any one of the preceding claims, **characterized in that** the first flange (210) has concave and convex regions along its periphery.

9. The housing assembly according to any one of the preceding claims, **characterized in that** the first flange (210) and the second flange (310) have functionally corresponding geometries in lateral regions contacting one another.

10. The housing assembly according to Claim 9, **characterized in that** the first flange (210) is concave in a lateral region contacting the second flange (310), and the second flange (310) is convex in a lateral region contacting the first flange (210), or
**characterized in that** the first flange (210) is convex in a lateral region contacting the second flange (310), and the second flange (310) is concave in a lateral region contacting the first flange (210).

11. The housing assembly according to any one of the preceding claims, **characterized in that** the housing (100) has a third connection opening (130) and a third connecting piece (400) with a third flange (410).

12. The housing assembly according to Claim 11, **characterized in that** at least parts of the second flange (310) and the third flange (410) overlap, such that the third connecting piece (400) is fixable on the housing (100) together with the second connecting piece (300).

13. The housing assembly according to Claim 12, **characterized in that** a borehole is provided in each of the overlapping parts of the second flange (310) and the third flange (410), through which borehole a screw (500) extends and fixes the third connecting piece (400) on the housing (100) together with the second connecting piece (300).

14. A method for fixing multiple connections to a housing (100) for a turbocharger, wherein the method comprises the following steps:
inserting a first connecting piece (200) into a first connection opening (110) of the housing (100), wherein the first connecting piece (200) comprises a first flange (210);
turning the first connecting piece (200) so that the locking part (212) of the first flange (210) is arranged under an overhang (142) of a projection (140) of the housing (100);
inserting a second connecting piece (300) into a second connection opening (120) of the housing (100), wherein the second connecting piece (300) comprises a second flange (310), and wherein the first flange (210) and the second flange (310) are configured in such a way that a turning of the first flange (210) is no longer possible after the insertion of the second connecting piece (300);
fixing the second connecting piece (300) to the housing (100).

15. The method according to Claim 14, **characterized in that**, prior to the fixing of the second flange (300) to the housing (100), a third connecting piece (400) with a third flange (410) is inserted into a third connection opening (130), and subsequently the third connecting piece (400) is fixed on the housing (100) together with the second connecting piece (300) via the third flange (410) and the second flange (310).

## Patentansprüche

1. Eine Gehäuseanordnung (10) für einen Turbolader, umfassend
ein Gehäuse (100), das mindestens eine erste Verbindungsöffnung (110) und eine zweite Verbindungsöffnung (120) aufweist,
ein erstes Verbindungsstück (200) mit einem ersten Flansch (210) und ein zweites Verbindungsstück 300 mit einem zweiten Flansch (310), wobei das erste Verbindungsstück (200) mit der ersten Verbindungsöffnung (110) verbunden ist und das zweite Verbindungsstück (300) mit der zweiten Verbindungsöffnung (120) verbunden ist,
**dadurch gekennzeichnet, dass** das Gehäuse (100) einen Vorsprung (140) mit einem Überhang (142) aufweist, wobei ein Verriegelungsteil (212) des ersten Flanschs (210) unter dem Überhang (142) angeordnet ist und wobei das zweite Verbindungsstück (300) sicher am Gehäuse (100) befestigt ist und wobei der erste Flansch (210) und der zweite Flansch (310) derart ausgelegt und in Bezug zueinander angeordnet sind, dass ein Drehen des ersten Flanschs (210) durch den zweiten Flansch (310) verhindert wird.

2. Die Gehäuseanordnung gemäß Anspruch 1, **dadurch gekennzeichnet, dass** der zweite Flansch (310) fest mit dem Gehäuse (100) verbunden ist, um das zweite Verbindungsstück (300) sicher am Gehäuse (100) zu befestigen, insbesondere wobei der zweite Flansch (310) über eine Schraubverbindung am Gehäuse (100) befestigt ist.

3. Die Gehäuseanordnung gemäß irgendeinem der vorhergehenden Ansprüche, **dadurch gekennzeichnet, dass** das erste Verbindungsstück (200) und das zweite Verbindungsstück (300) jeweils eine rohrförmige Einheit (220, 320) umfassen, wobei sich die rohrförmigen Einheiten (220, 320) durch den jeweiligen Flansch (210, 310) in die zugehörigen ersten und zweiten Verbindungsöffnungen (110, 120) erstrecken, insbesondere wobei die rohrförmigen Einheiten (220, 320) jeweils mindestens einen Teil einer Versorgungsleitung (222, 322) und eine Verbindungsmuffe (224, 324) umfassen.

4. Die Gehäuseanordnung gemäß irgendeinem der vorhergehenden Ansprüche, **dadurch gekennzeichnet, dass** eine Dichtung (600) in den jeweiligen Verbindungsöffnungen (110, 120) zwischen den Verbindungsstücken (200, 300) und der Gehäusewand angeordnet ist, insbesondere wobei die Dichtung (600) ein O-Ring ist.

5. Die Gehäuseanordnung gemäß irgendeinem der vorhergehenden Ansprüche, **dadurch gekennzeichnet, dass** das erste Verbindungsstück (200) und der erste Flansch (210) derart ausgelegt sind, dass das erste Verbindungsstück (200) bei der Montage der Gehäuseanordnung (10) in die erste Verbindungsöffnung (110) einsetzbar ist und anschließend drehbar ist, sodass der Verriegelungsteil (212) des ersten Flanschs (210) unter den Überhang (142) gedreht wird.

6. Die Gehäuseanordnung gemäß Anspruch 5, **dadurch gekennzeichnet, dass** das erste Verbindungsstück (200) und der erste Flansch (210) derart ausgelegt sind, dass das erste Verbindungsstück (200) um mindestens 15° drehbar ist, insbesondere um mindestens 90° drehbar ist, nachdem es in die erste Verbindungsöffnung (110) eingesetzt wurde.

7. Die Gehäuseanordnung gemäß irgendeinem der vorhergehenden Ansprüche, **dadurch gekennzeichnet, dass** der erste Flansch (210) eine asymmetrische Form aufweist.

8. Die Gehäuseanordnung gemäß irgendeinem der vorhergehenden Ansprüche, **dadurch gekennzeichnet, dass** der erste Flansch (210) entlang seines Umfangs konkave und konvexe Bereiche aufweist.

9. Die Gehäuseanordnung gemäß irgendeinem der vorhergehenden Ansprüche, **dadurch gekennzeichnet, dass** der erste Flansch (210) und der zweite Flansch (310) funktional zugehörige Geometrien in den lateralen Bereichen aufweisen, die einander berühren.

10. Die Gehäuseanordnung gemäß Anspruch 9, **dadurch gekennzeichnet, dass** der erste Flansch (210) in einem lateralen Bereich, der den zweiten Flansch (310) berührt, konkav ist und der zweite Flansch (310) in einem lateralen Bereich, der den ersten Flansch (210) berührt, konvex ist, oder
**dadurch gekennzeichnet, dass** der erste Flansch (210) in einem lateralen Bereich, der den zweiten Flansch (310) berührt, konvex ist und der zweite Flansch (310) in einem lateralen Bereich, der den ersten Flansch (210) berührt, konkav ist.

11. Die Gehäuseanordnung gemäß irgendeinem der vorhergehenden Ansprüche, **dadurch gekennzeichnet, dass** das Gehäuse (100) eine dritte Verbindungsöffnung (130) und ein drittes Verbindungsstück (400) mit einem dritten Flansch (410) aufweist.

12. Die Gehäuseanordnung gemäß Anspruch 11, **dadurch gekennzeichnet, dass** zumindest Teile des zweiten Flanschs (310) und des dritten Flanschs (410) einander überlagern, sodass das dritte Verbindungsstück (400) zusammen mit dem zweiten Verbindungsstück (300) am Gehäuse (100) befestigbar ist.

13. Die Gehäuseanordnung gemäß Anspruch 12, **dadurch gekennzeichnet, dass** eine Bohrung in jedem der überlagernden Teile des zweiten Flanschs (310) und des dritten Flanschs (410) vorgesehen ist, wobei sich durch die Bohrung eine Schraube (500) erstreckt und das dritte Verbindungsstück (400) zusammen mit dem zweiten Verbindungsstück (300) am Gehäuse (100) befestigt.

14. Ein Verfahren zum Befestigen mehrerer Verbindungen an einem Gehäuse (100) für einen Turbolader,
wobei das Verfahren die folgenden Schritte umfasst:
Einsetzen eines ersten Verbindungsstücks (200) in eine erste Verbindungsöffnung (110) des Gehäuses (100), wobei das erste Verbindungsstück (200) einen ersten Flansch (210) umfasst;
Drehen des ersten Verbindungsstücks (200) derart, dass der Verriegelungsteil (212) des ersten Flanschs (210) unter einem Überhang (142) eines Vorsprungs (140) des Gehäuses (100) angeordnet ist;
Einsetzen eines zweiten Verbindungsstücks (300) in eine zweite Verbindungsöffnung (120) des Gehäuses (100), wobei das zweite Verbindungsstück (300) einen zweiten Flansch (310) umfasst und wobei der erste Flansch (210) und der zweite Flansch (310) derart ausgelegt sind, dass ein Drehen des ersten Flanschs (210) nach dem Einsetzen des zweiten Verbindungsstücks (300) nicht mehr möglich ist;
Befestigen des zweiten Verbindungstücks (300) am Gehäuse (100).

15. Das Verfahren gemäß Anspruch 14, **dadurch gekennzeichnet, dass** vor dem Befestigen des zweiten Flanschs (300) am Gehäuse (100) ein drittes Verbindungsstück (400) mit einem dritten Flansch (410) in eine dritte Verbindungsöffnung (130) eingesetzt wird und anschließend das dritte Verbindungsstück (400) zusammen mit dem zweiten Verbindungsstück (300) über den dritten Flansch (410) und den zweiten Flansch (310) am Gehäuse (100) befestigt wird.

## Revendications

1. Un agencement de carter (10) pour un turbocompresseur, comprenant
un carter (100) ayant au moins une première ouverture de connexion (110) et une deuxième ouverture de connexion (120),
une première pièce de connexion (200) avec une première bride (210) et une deuxième pièce de connexion 300 avec une deuxième bride (310), la première pièce de connexion (200) étant connectée à la première ouverture de connexion (110) et la deuxième pièce de connexion (300) étant connectée à la deuxième ouverture de connexion (120),
**caractérisé en ce que** le carter (100) a une saillie (140) avec un surplomb (142), une partie de verrouillage (212) de la première bride (210) étant disposée sous le surplomb (142), et la deuxième pièce de connexion (300) étant fixée de manière sécurisée sur le carter (100), et la première bride (210) et la deuxième bride (310) étant conçues et disposées l'une par rapport à l'autre de sorte qu'une rotation de la première bride (210) soit empêchée par la deuxième bride (310).

2. L'agencement de carter selon la revendication 1, **caractérisé en ce que** la deuxième bride (310) est connectée de manière fixe au carter (100) pour fixer de manière sécurisée la deuxième pièce de connexion (300) sur le carter (100), en particulier la deuxième bride (310) étant fixée sur le carter (100) par l'intermédiaire d'une connexion à vis.

3. L'agencement de carter selon l'une quelconque des revendications précédentes, **caractérisé en ce que** la première pièce de connexion (200) et la deuxième pièce de connexion (300) comprennent respectivement une unité tubulaire (220, 320), les unités tubulaires (220, 320) s'étendant à travers la bride (210, 310) respective dans les première et deuxième ouvertures de connexion (110, 120) correspondantes, en particulier les unités tubulaires (220, 320) comprenant chacune au moins une partie d'une conduite d'alimentation (222, 322) et d'un manchon de connexion (224, 324).

4. L'agencement de carter selon l'une quelconque des revendications précédentes, **caractérisé en ce qu'**un joint (600) est disposé dans les ouvertures de connexion (110, 120) respectives entre les pièces de connexion (200, 300) et la paroi de carter, en particulier le joint (600) étant un joint torique.

5. L'agencement de carter selon l'une quelconque des revendications précédentes, **caractérisé en ce que** la première pièce de connexion (200) et la première bride (210) sont conçues de sorte que la première pièce de connexion (200) puisse être insérée dans la première ouverture de connexion (110) lors du montage de l'agencement de carter (10) et puisse ultérieurement être tournée de sorte que la partie de verrouillage (212) de la première bride (210) soit tournée sous le surplomb (142).

6. L'agencement de carter selon la revendication 5, **caractérisé en ce que** la première pièce de connexion (200) et la première bride (210) sont conçues de sorte que la première pièce de connexion (200) puisse être tournée d'au moins 15°, en particulier puisse être tournée d'au moins 90°, après avoir été insérée dans la première ouverture de connexion (110).

7. L'agencement de carter selon l'une quelconque des revendications précédentes, **caractérisé en ce que** la bride (210) a une forme asymétrique.

8. L'agencement de carter selon l'une quelconque des revendications précédentes, **caractérisé en ce que** la première bride (210) a des régions concaves et convexes sur sa périphérie.

9. L'agencement de carter selon l'une quelconque des revendications précédentes, **caractérisé en ce que** la première bride (210) et la deuxième bride (310) ont des géométries fonctionnellement correspondantes dans les régions latérales en contact l'une avec l'autre.

10. L'agencement de carter selon la revendication 9, **caractérisé en ce que** la première bride (210) est concave dans une région latérale en contact avec la deuxième bride (310), et la deuxième bride (310) est convexe dans une région latérale en contact avec la première bride (210), ou
**caractérisé en ce que** la première bride (210) est convexe dans une région latérale en contact avec la deuxième bride (310), et la deuxième bride (310) est concave dans une région latérale en contact avec la première bride (210).

11. L'agencement de carter selon l'une quelconque des revendications précédentes, **caractérisé en ce que** le carter (100) a une troisième ouverture de connexion (130) et une troisième pièce de connexion (400) avec une troisième bride (410).

12. L'agencement de carter selon la revendication 11, **caractérisé en ce qu'**au moins des parties de la deuxième bride (310) et de la troisième bride (410) se chevauchent, de sorte que la troisième pièce de connexion (400) puisse être fixée sur le carter (100) avec la deuxième pièce de connexion (300).

13. L'agencement de carter selon la revendication 12, **caractérisé en ce qu'**un trou est pratiqué dans chacune des parties se chevauchant de la deuxième bride (310) et de la troisième bride (410), trou à travers lequel une vis (500) s'étend et fixe la troisième pièce de connexion (400) sur le carter (100) avec la deuxième pièce de connexion (300).

14. Un procédé pour fixer des connexions multiples à un carter (100) pour un turbocompresseur, le procédé comprenant les étapes consistant à :
insérer une première pièce de connexion (200) dans une première ouverture de connexion (110) du carter (100), la première pièce de connexion (200) comprenant une première bride (210) ;
tourner la première pièce de connexion (200) de sorte que la partie de verrouillage (212) de la première bride (210) soit disposée sous un surplomb (142) d'une saillie (140) du carter (100) ;
insérer une deuxième pièce de connexion (300) dans une deuxième ouverture de connexion (120) du carter (100), la deuxième pièce de connexion (300) comprenant une deuxième bride (310), et la première bride (210) et la deuxième bride (310) étant conçues de sorte qu'une rotation de la première bride (210) ne soit plus possible après l'insertion de la deuxième pièce de connexion (300) ;
fixer la deuxième pièce de connexion (300) au carter (100).

15. Le procédé selon la revendication 14, **caractérisé en ce que**, avant la fixation de la deuxième bride (300) sur le carter (100), une troisième pièce de connexion (400) avec une troisième bride (410) est insérée dans une troisième ouverture de connexion (130), et ultérieurement la troisième pièce de connexion (400) est fixée sur le carter (100) avec la deuxième pièce de connexion (300) par l'intermédiaire de la troisième bride (410) et de la deuxième bride (310).
